# EUROPEAN PATENT APPLICATION

(11) **EP 3 594 517 A1**
(43) Date of publication of application: **15.01.2020**
(21) Application number: 18183392.2
(22) Date of filing: 13.07.2018
(51) Int. Cl.: F16C 29/02, F16C 29/04, F16C 17/24, F16C 19/52, B23Q 1/44, F16C 17/02

(54) **LINEAR BEARING ASSEMBLY AND METHOD OF OPERATING SUCH BEARING ASSEMBLY**

(71) Applicant: High Precision Systems IVS, 3460 Birkerød (DK)
(72) Inventor: DAHL, Niels Kragh Blume, 3460 Birkerød (DK)
(74) Representative: Inspicos P/S

(57) **Abstract**

The linear bearing assembly (1) has a slide (2) being linearly displaceable on a guide rail (3) in a longitudinal direction of the guide rail. The slide is supported by means of at least one bearing module (4, 5, 6, 7, 8, 9) including a spindle (10) and at least one bearing (19), and the at least one bearing is arranged on the spindle and includes a rotatable bearing part (11) being rotatable in relation to the spindle. In view of eliminating the stick-slip effect, the spindle is adapted to be rotated in relation to the rotatable bearing part by means of a motor in order to modify a relative rotational speed between the rotatable bearing part and the spindle. The spindle is journaled (18) rotatably on the slide with its longitudinal axis at right angles to the longitudinal direction of the guide rail, and the rotatable bearing part is arranged to roll on the guide rail.

## Description

The present invention relates to a linear bearing assembly having a slide being linearly displaceable on a guide rail in a longitudinal direction of the guide rail, the slide being supported by means of at least one bearing module including a spindle and at least one bearing, the at least one bearing being arranged on the spindle and including a rotatable bearing part being rotatable in relation to the spindle, the spindle being adapted to be rotated in relation to the rotatable bearing part by means of a motor in order to modify a relative rotational speed between the rotatable bearing part and the spindle.

WO 2012/045739 A1 discloses a device for providing rectilinear motion based on a circular shaped bearing guide rail. The system uses a rotating circular shaped guide rail controlled by a rotational motion actuator system during linear motion and thereby improves the frictional conditions of the bearings in the rectilinear motion system. However, although static friction may be avoided, friction in the linear displacement direction is not completely eliminated, and dynamic friction in the rotational direction may cause inaccuracies in the rectilinear motion. Moreover, the deflection of the rotating circular shaped guide rail will vary with the linear position of the displaceable slide and will result in elastic potential energy being stored in the system. Because the circular shaped guide rail is rotating, it is not possible to compensate for the deflection of the guide rail by adapting the form of the guide rail along its length. The rectilinear motion of the slide will therefore not be completely linear, and the accuracy of the system may be limited due to friction and storage of elastic potential energy in the system during operation.

JPS63196341 A discloses a guide mechanism wherein a slide is longitudinally slideable along two guide bars which are rotated in the mutually opposite directions in order to reduce static friction. However, apart from the fact that dynamic friction in the rotational directions may be outbalanced by the counter rotating guide bars, this device may have the same disadvantages as mentioned above.

US 5,600,188 discloses a dual drive control system applicable to precision machine tools and robotics for eliminating the consequences resulting from coulomb friction and stiction by avoiding the operating points where these defects manifest themselves. This objective is achieved by utilizing two actuators which are so to say driven in opposite directions. However, this document is only concerned with the stiction problem in the drive system of the slide and not in the bearings of the slide.

The object of the present invention is to provide a linear bearing assembly which may be operated more accurately than known devices.

In view of this object, the spindle is journaled rotatably on the slide with its longitudinal axis at right angles to the longitudinal direction of the guide rail, and the rotatable bearing part is arranged to roll on the guide rail.

In this way, the influence of friction on the movement of the slide on the guide rail may be minimised, because static friction in the bearing influencing the movement of the slide may be completely eliminated by maintaining relative rotation between the rotatable bearing part and the spindle. Furthermore, any deflection of the spindle resulting from the load of the slide may remain constant, because the bearing is not displaced along the spindle, and any deflection of the guide rail may be compensated for by correcting the face of the guide rail on which the rotatable bearing part rolls. Consequently, an at least substantially complete rectilinear motion of the slide may be obtained, and the amount of elastic potential energy being stored in the system may be minimised. The combined result is that the accuracy of the system may be increased substantially compared to known systems.

In an embodiment, the slide is supported by means of at least one pair of said bearing modules, and the respective spindles of said pair of bearing modules are arranged in parallel and are adapted to be rotated in opposite rotational directions by means of the motor. Thereby, also dynamic friction in the bearings potentially influencing the movement of the slide may be at least substantially eliminated by maintaining relative rotation between the rotatable bearing parts and the corresponding spindles, because the contributions of dynamic friction from the two bearing modules of the pair of bearing modules are oppositely directed and therefore may at least substantially cancel each other. As long as the rotational speed of the respective spindles is relatively high in relation to the rotational speed of the corresponding rotatable bearing parts during longitudinal displacement of the slide along the guide rail, the effect of the dynamic friction in the bearings potentially influencing the movement of the slide may be sufficiently relieved.

In an embodiment, the respective spindles of said pair of bearing modules are driven by respective separate motors. Thereby, the rotational speed of each spindle may easily be independently optimised.

In a structurally particularly advantageous embodiment, said motors are arranged on the slide. Preferably, said motors are electric motors.

In an embodiment, each of said bearing modules includes two bearings arranged at a distance from each other on the spindle. Thereby, the slide may be supported on the guide rail in a stable way.

In an embodiment, the spindle of each bearing module is journaled rotatably in bearing blocks mounted on the slide on either side of each bearing. Thereby, any deflection of the spindle may be minimised.

In a structurally particularly advantageous embodiment, the motor is arranged in driving connection with the spindle of at least one of the bearing modules between two spaced bearing blocks. Thereby, the weight of the motor may be centred on the slide and may therefore not contribute to inaccuracies in the movement of the slide.

In an embodiment, the slide is supported by means of at least two of said bearing modules having mutually angled spindles. Thereby, the slide may be even better supported on the guide rail and may be prevented from being lifted away the guide rail during movement.

Preferably, said mutually angled spindles are in driving connection with each other. Thereby, only one motor may be needed for said at least two bearing modules.

In a structurally particularly advantageous embodiment, the guide rail has a dovetail-formed cross-section with a top face and two opposed side faces tapering below the top face, the slide is supported by means of one pair of said bearing modules having bearings including a rotatable bearing part adapted to roll on the top face of the guide rail, and the slide is supported by means of two pairs of said bearing modules having bearings including rotatable bearing parts adapted to roll on the respective two opposed side faces of the guide rail. Thereby, the slide may be even better supported on the guide rail and may be prevented from being lifted away the guide rail during movement.

In an embodiment, the slide is supported by means of at least one pair of said bearing modules, the respective spindles of said pair of bearing modules are arranged in parallel, and the linear bearing assembly includes a control system adapted to independently control the rotational speed of each of the respective spindles of said pair of bearing modules so that the relative rotational speed between each spindle and the rotatable bearing part of its associated bearing corresponds at least substantially to but is oppositely directed to the relative rotational speed between the other spindle and the rotatable bearing part of its associated bearing, independently of any displacement of the slide along the guide rail during normal operation. Thereby, the influence of dynamic friction in the bearings on the movement of the slide may be even better reduced, independently of any speed of displacement of the slide along the guide rail, by maintaining relative rotation between the rotatable bearing parts and the corresponding spindles, because the contributions of dynamic friction from the two bearing modules of the pair of bearing modules are oppositely directed and also at least substantially of the same size and therefore may at least substantially cancel each other.

In an embodiment, the linear bearing assembly includes a linear actuator adapted to displace the slide along the guide rail and a linear control system adapted to control the linear actuator, and the linear control system is adapted to control the linear motion of the slide along the guide rail independently of the rotational speed of each of the respective spindles of said pair of bearing modules. Thereby, a very accurate control of the position of the slide on the guide rail may be obtained.

The present invention further relates to a method of operating a linear bearing assembly by displacing a slide linearly on a guide rail in a longitudinal direction of the guide rail, the slide being supported by means of at least one bearing module including a spindle and at least one bearing, the at least one bearing being arranged on the spindle and including a rotatable bearing part being rotatable in relation to the spindle, and by rotating the spindle in relation to the rotatable bearing part by means of a motor, thereby modifying a relative rotational speed between the rotatable bearing part and the spindle.

The method is characterised in that the spindle is maintained rotatably journaled on the slide with its longitudinal axis at right angles to the longitudinal direction of the guide rail, and in that the rotatable bearing part is rolling on the guide rail. Thereby, the above-mentioned features may be obtained.

In an embodiment, the slide is supported by means of at least one pair of said bearing modules, and the respective spindles of said pair of bearing modules are arranged in parallel and are rotated in opposite rotational directions by means of the motor. Thereby, the above-mentioned features may be obtained.

In an embodiment, the slide is supported by means of at least one pair of said bearing modules, the respective spindles of said pair of bearing modules are arranged in parallel, and the rotational speed of each of the respective spindles of said pair of bearing modules is controlled independently by means of a control system so that the relative rotational speed between each spindle and the rotatable bearing part of its associated bearing corresponds at least substantially to but is oppositely directed to the relative rotational speed between the other spindle and the rotatable bearing part of its associated bearing, independently of the speed and direction of displacement of the slide along the guide rail. Thereby, the above-mentioned features may be obtained.

The invention will now be explained in more detail below by means of examples of embodiments with reference to the very schematic drawing, in which
Fig. 1 is a perspective view of a linear bearing assembly having a slide being linearly displaceable on a guide rail according to the invention, whereby the slide is illustrated separately from the guide rail,

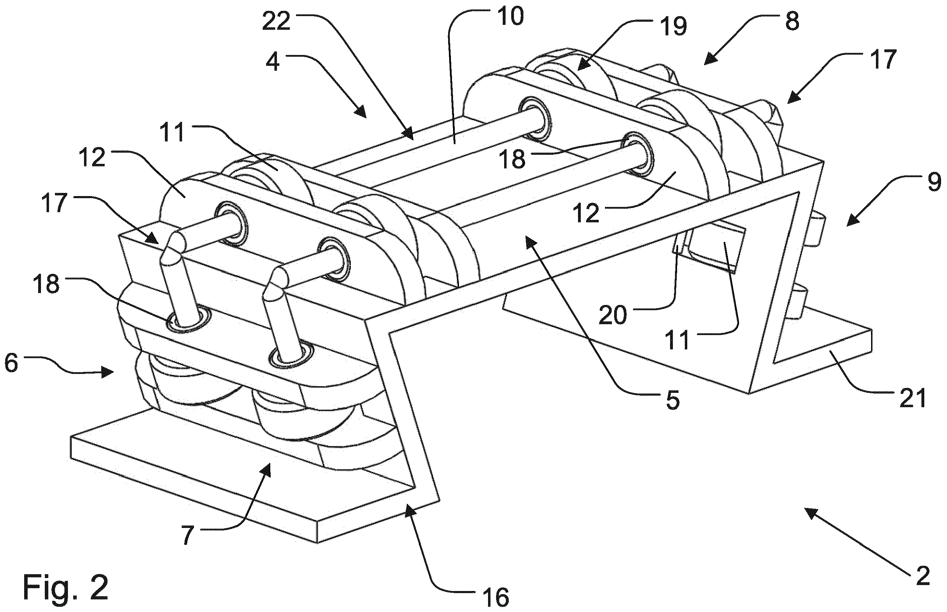

Fig. 2 is a perspective view of the slide of Fig. 1,
Fig. 3 is an end view of the slide of Fig. 2,
Fig. 4 is a vertical cross-section through the slide of Fig. 2 along the spindles of three of the bearing modules, and

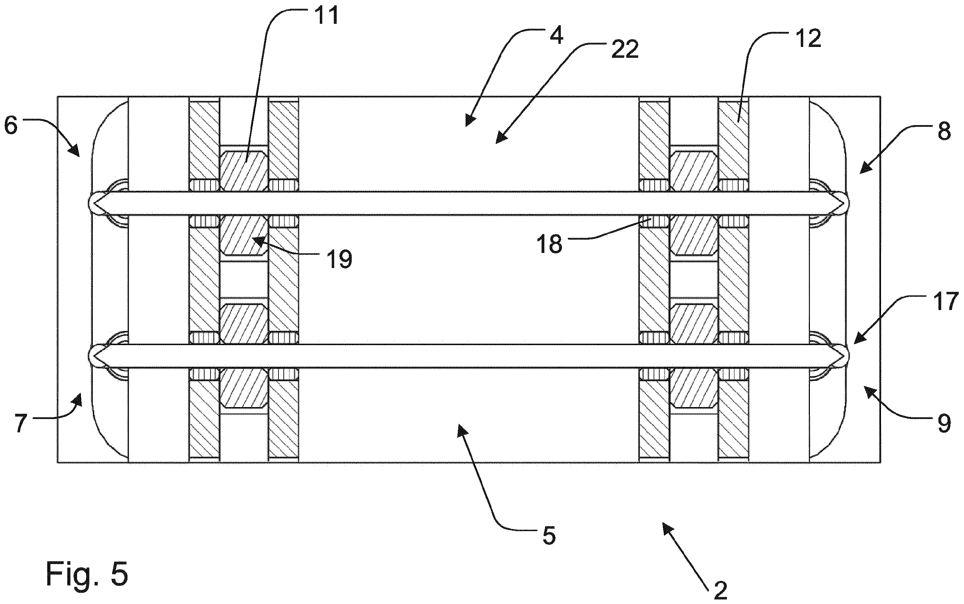

Fig. 5 is a horizontal cross-section through the slide of Fig. 2 along the spindles of the two upper bearing modules.

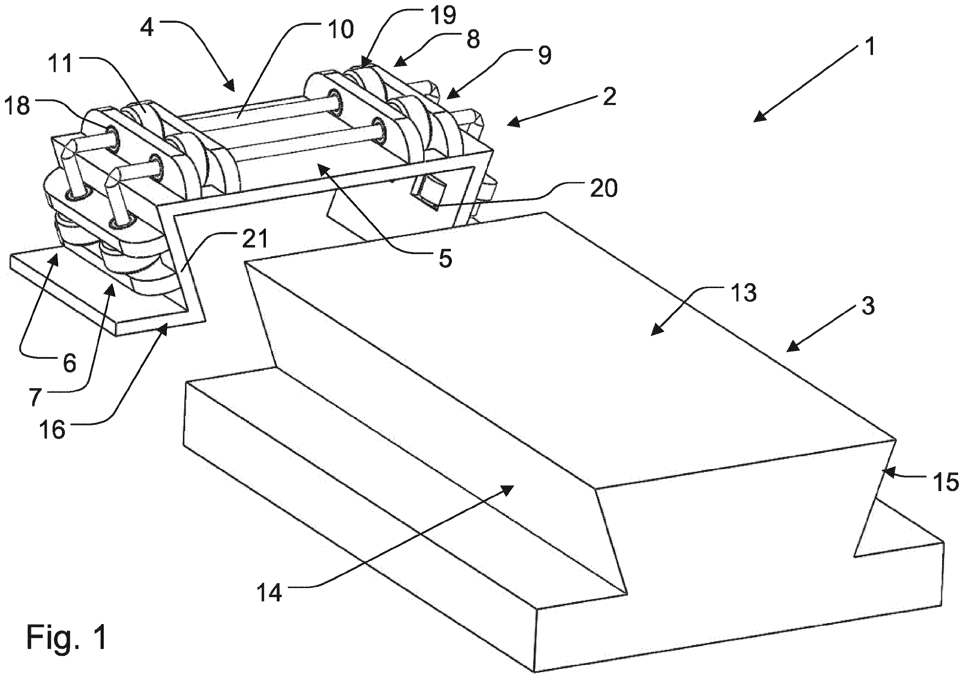

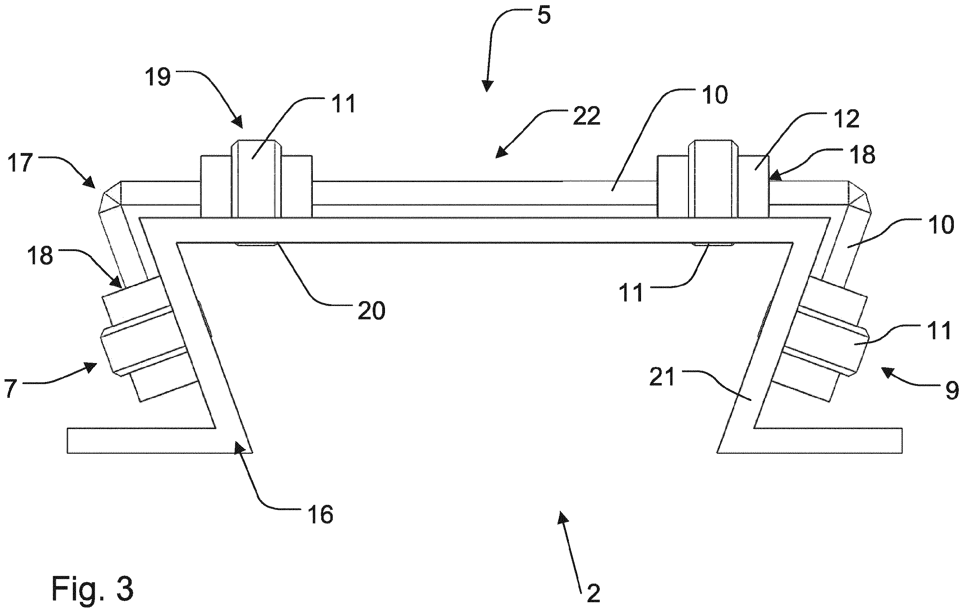

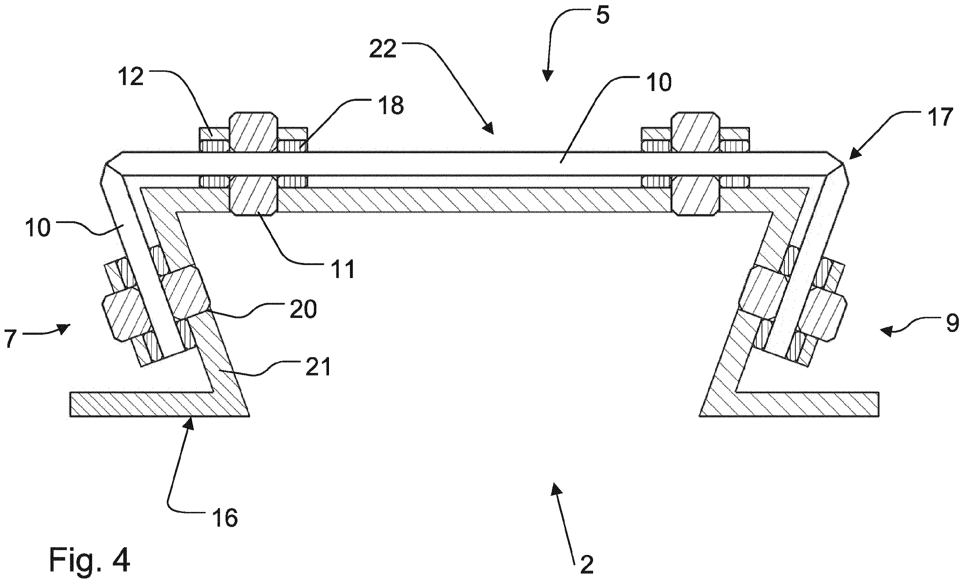

Fig. 1 shows a linear bearing assembly 1 according to the present invention, having a slide 2 being linearly displaceable on a guide rail 3 in a longitudinal direction of the guide rail. In the illustrated embodiment, the slide 2 is adapted to be supported on the guide rail 3 by means of six bearing modules 4, 5, 6, 7, 8, 9, each bearing module including a spindle 10 and one or two bearings 19. As particularly well seen in Figs. 3 and 4, each bearing is arranged on the spindle 10 and includes a rotatable bearing part 11 being rotatable in relation to the spindle 10. The spindle 10 is adapted to be rotated in relation to the rotatable bearing part 11 by means of a not shown motor in order to modify a relative rotational speed between the rotatable bearing part 11 and the spindle 10. As seen in the figures, the spindle 10 is journaled 18 rotatably on the slide 2 with its longitudinal axis at right angles to the longitudinal direction of the guide rail 3, and the rotatable bearing part 11 is arranged to roll on the guide rail 3.

In the illustrated embodiments, the bearings 19 have the form of simple slide bearings. In its simplest form, the slide bearing is made up by the rotatable bearing part 11 itself, whereby the rotatable bearing part 11 simply rotates directly on the spindle 10. However, according to the present invention, any suitable type of bearing may be utilized, such as for instance needle bearings or roller bearings. In the case of needle bearings or roller bearings, among others, the bearing 19 includes an inner part adapted to fit on the spindle 10 without rotation relative to the spindle 10, and the bearing 19 further includes an outer part adapted to rotate in relation to the inner part by means of needles or rollers, as the case may be, arranged in between the inner part and the outer part. In this case, the outer part forms the rotatable bearing part 11 of the bearing 19. Needle bearings, roller bearings and many other different types of bearings are well known in the art which generally provides for less friction than slide bearings.

The journaling 18 of spindles 10 in the bearing blocks 12 is also illustrated as simple slide bearings. However, likewise, according to the present invention, any suitable type of bearing may be utilized for said journaling 18, such as for instance needle bearings or roller bearings.

As seen in Fig. 1, the guide rail 3 has a dovetail-formed cross-section with a top face 13 and two opposed side faces 14, 15 tapering below the top face 13, namely a left side face 14 and a right side face 15 when seen in the direction from the lower right corner of the figure. The slide 2 is supported by means of one pair of bearing modules 4, 5, each bearing module 4, 5 having two spaced bearings 19 each including a rotatable bearing part 11 adapted to roll on the top face 13 of the guide rail 3. As seen, these bearing modules 4, 5 each has a spindle 10 extending in parallel with the top face 13 of the guide rail 3. Furthermore, the slide 2 is supported by means of one pair of bearing modules 6, 7, each bearing module 6, 7 having one bearing 19 including a rotatable bearing part 11 adapted to roll on the left side face 14 of the guide rail 3. As seen, these bearing modules 6, 7 each has a spindle 10 extending in parallel with the left side face 14 of the guide rail 3. Furthermore, the slide 2 is supported by means of one pair of bearing modules 8, 9, each bearing module 8, 9 having one bearing 19 including a rotatable bearing part 11 adapted to roll on the right side face 15 of the guide rail 3. As seen, these bearing modules 8, 9 each has a spindle 10 extending in parallel with the right side face 15 of the guide rail 3.

As seen, in the illustrated embodiment, bearing modules 4, 5, 6, 7, 8, 9 having mutually angled spindles 10 are connected with each other in that said mutually angled spindles 10 are in driving connection 17 with each other. For instance, it is seen that the spindles 10 of the left side bearing module 7 are mutually angled with and in driving connection 17 with the spindles 10 of the top bearing module 5. Said driving connection 17 is in the illustrated embodiment arranged by means of bevelled gears which are only illustrated schematically.

The spindle 10 of each bearing module 4, 5, 6, 7, 8, 9 is journaled 18 rotatably in bearing blocks 12 mounted on a slide body 16 of the slide 2 on either side of each bearing 19. By positioning the bearing blocks 12 on either side of the bearing 19 and very close to the bearing 19, deflection of the associated spindle 10 may be minimised, thereby allowing for greater accuracy. As seen, the slide body 16 is formed as a hollow part with an inner dovetail-formed cross-section corresponding to the outer of the cross-section of the guide rail 3, but somewhat larger. The bearing modules 4, 5, 6, 7, 8, 9 are arranged on the outside of the slide body 16, and the rotatable bearing part 11 of each bearing 19 protrudes slightly through a corresponding opening 20 in a wall 21 forming the slide body 16 so that the rotatable bearing part 11 may abut the corresponding face of the guide rail 3.

Each spindle 10 of the top bearing modules 4, 5 is driven by a separate not shown electric motor arranged on the slide 2. Each motor is arranged in driving connection with the corresponding spindle 10 at a motor position 22 between two spaced bearing blocks 12. Electric motors are preferred; however, any suitable motor may be utilized, such as hydraulic or pneumatic motors.

In one embodiment, the respective spindles 10 of the top bearing modules 4, 5 are adapted to be rotated in opposite rotational directions by means of the separate motors. Because of the driving connection 17 between mutually angled spindles, also the respective spindles 10 of the left side bearing modules 6, 7 are adapted to be rotated in opposite rotational directions, and the respective spindles 10 of the right side bearing modules 8, 9 are adapted to be rotated in opposite rotational directions. Thereby, dynamic friction in the bearings 19 potentially influencing the movement of the slide 2 may be at least substantially eliminated by maintaining relative rotation between the rotatable bearing parts 11 and the corresponding spindles 10, because the contributions of dynamic friction from the respective bearing modules having oppositely rotating spindles 10 are oppositely directed and therefore may at least substantially cancel each other. As long as the rotational speed of the respective spindles 10 is relatively high in relation to the rotational speed of the corresponding rotatable bearing parts 11 during longitudinal displacement of the slide 2 along the guide rail 3, the effect of the dynamic friction in the bearings 19 potentially influencing the movement of the slide 2 may be sufficiently relieved.

In another embodiment, the linear bearing assembly 1 includes a not shown control system adapted to independently control the rotational speed of the respective spindles 10 of the top bearing modules 4, 5. Because of the driving connection 17 between mutually angled spindles, also the rotational speed of the respective spindles 10 of the left side bearing modules 6, 7 and of the right side bearing modules 8, 9 is correspondingly controlled by the control system. Thereby, the rotational speed of each of the respective spindles 10 of the top pair of bearing modules 4, 5 is controlled so that the relative rotational speed between each spindle 10 and the rotatable bearing part 11 of its associated bearing 19 corresponds at least substantially to, but is oppositely directed to, the relative rotational speed between the other spindle 10 and the rotatable bearing part 11 of its associated bearing 19, independently of any displacement of the slide 2 along the guide rail 3 during normal operation. The control system may control the rotational speed of the respective spindles 10 on the basis of measurements of the rotational speed of the relevant rotatable bearing parts 11 and/or on the basis of measurements of the linear speed of the slide 2 and/or on the basis of inputs from a not shown linear control system adapted to control a not shown linear actuator adapted to displace the slide 2 along the guide rail 3.

The linear bearing assembly 1 preferably includes a not shown linear actuator adapted to displace the slide 2 along the guide rail 3 and a not shown linear control system adapted to control the linear actuator, wherein said linear control system is adapted to control the linear motion of the slide 2 along the guide rail 3 independently of the rotational speed of each of the respective spindles 10 of the pair of top bearing modules 4, 5.

Although in the illustrated embodiment, the guide rail 3 has a dovetail-formed cross-section, many other configurations are possible. The guide rail 3 could for instance have a rectangular cross-section, a triangular cross-section or any other suitable form. The number of bearing modules may be adapted accordingly. Similarly, although in the illustrated embodiment, two sets of bearing modules are arranged with their spindles 10 in parallel at each face of the guide rail 3, other configurations are possible. For instance, three, four, five or six sets of bearing modules may be arranged with their spindles 10 in parallel. However, it may be preferred that this number is equal in order to outbalance dynamic friction as explained above.

Preferably, the guide rail 3 is arranged stationary with the slide 2 movably arranged thereon; however, according to the present invention, it is also possible that the slide 2 may be arranged stationary with the guide rail 3 movably arranged thereon. In the latter arrangement, the slide 2 could function as a kind of conveyor for the guide rail 3 which could function as a carriage displaceably arranged on the conveyor.

The linear bearing assembly 1 according to the present invention may be used in various applications. For instance, the linear bearing assembly 1 may be used in CNC machines, such as for instance milling machines, drilling machines and the like. In particular, the linear bearing assembly 1 is advantageous in heavy machinery, such as CNC machines, in which heavy loads must be displaced with great accuracy. In prior art machinery moving heavy loads, the stiction/stick-slip effect typically sets a limit for the accuracy with which a slide may be displaced. According to the present invention, on the contrary, the stiction/stick-slip effect may practically be eliminated and heavy loads, such as hundreds of kilos, may be displaced with great accuracy, such as with a tolerance of below 1 micron.

### List of reference numbers

- 1: linear bearing assembly
- 2: slide
- 3: guide rail
- 4, 5: top bearing module
- 6, 7: left side bearing module
- 8, 9: right side bearing module
- 10: spindle
- 11: rotatable bearing part
- 12: bearing block
- 13: top face of guide rail
- 14: left side face of guide rail
- 15: right side face of guide rail
- 16: slide body
- 17: driving connection between mutually angled spindles
- 18: journaling of spindle
- 19: bearing
- 20: opening through wall of slide body
- 21: wall of slide body
- 22: motor position

## Claims

1. A linear bearing assembly (1) having a slide (2) being linearly displaceable on a guide rail (3) in a longitudinal direction of the guide rail, the slide (2) being supported by means of at least one bearing module (4, 5, 6, 7, 8, 9) including a spindle (10) and at least one bearing (19), the at least one bearing (19) being arranged on the spindle (10) and including a rotatable bearing part (11) being rotatable in relation to the spindle (10), the spindle (10) being adapted to be rotated in relation to the rotatable bearing part (11) by means of a motor in order to modify a relative rotational speed between the rotatable bearing part (11) and the spindle (10), **characterised in that** the spindle (10) is journaled (18) rotatably on the slide (2) with its longitudinal axis at right angles to the longitudinal direction of the guide rail (3), and **in that** the rotatable bearing part (11) is arranged to roll on the guide rail (3).

2. A linear bearing assembly according to claim 1, wherein the slide (2) is supported by means of at least one pair of said bearing modules (4, 5, 6, 7, 8, 9), and wherein the respective spindles (10) of said pair of bearing modules (4, 5, 6, 7, 8, 9) are arranged in parallel and are adapted to be rotated in opposite rotational directions by means of the motor.

3. A linear bearing assembly according to claim 2, wherein the respective spindles (10) of said pair of bearing modules (4, 5, 6, 7, 8, 9) are driven by respective separate motors, wherein, preferably, said motors are arranged on the slide (2), and wherein, preferably, said motors are electric motors.

4. A linear bearing assembly according to any one of the preceding claims, wherein each of said bearing modules (4, 5, 6, 7, 8, 9) includes two bearings (19) arranged at a distance from each other on the spindle (10).

5. A linear bearing assembly according to any one of the preceding claims, wherein the spindle (10) of each bearing module (4, 5, 6, 7, 8, 9) is journaled (18) rotatably in bearing blocks (12) mounted on the slide (2) on either side of each bearing (19).

6. A linear bearing assembly according to claim 5, wherein the motor is arranged in driving connection with the spindle (10) of at least one of the bearing modules (4, 5) between two spaced bearing blocks (12).

7. A linear bearing assembly according to any one of the preceding claims, wherein the slide (2) is supported by means of at least two of said bearing modules (4, 5, 6, 7, 8, 9) having mutually angled spindles (10), and wherein, preferably, said mutually angled spindles (10) are in driving connection (17) with each other.

8. A linear bearing assembly according to any one of the preceding claims, wherein the guide rail (3) has a dovetail-formed cross-section with a top face (13) and two opposed side faces (14, 15) tapering below the top face (13), wherein the slide (2) is supported by means of one pair (4, 5) of said bearing modules having bearings (19) including a rotatable bearing part (11) adapted to roll on the top face (13) of the guide rail (3), and wherein the slide (2) is supported by means of two pairs (6, 7, 8, 9) of said bearing modules having bearings (19) including rotatable bearing parts (11) adapted to roll on the respective two opposed side faces (14, 15) of the guide rail (3).

9. A linear bearing assembly according to any one of the preceding claims, wherein the slide (2) is supported by means of at least one pair of said bearing modules (4, 5, 6, 7, 8, 9), wherein the respective spindles (10) of said pair of bearing modules are arranged in parallel, and wherein the linear bearing assembly includes a control system adapted to independently control the rotational speed of each of the respective spindles (10) of said pair of bearing modules (4, 5, 6, 7, 8, 9) so that the relative rotational speed between each spindle (10) and the rotatable bearing part (11) of its associated bearing (19) corresponds at least substantially to but is oppositely directed to the relative rotational speed between the other spindle (10) and the rotatable bearing part (11) of its associated bearing (19), independently of any displacement of the slide (2) along the guide rail (3) during normal operation.

10. A linear bearing assembly according to claim 9, wherein the linear bearing assembly (1) includes a linear actuator adapted to displace the slide (2) along the guide rail (3) and a linear control system adapted to control the linear actuator, and wherein the linear control system is adapted to control the linear motion of the slide (2) along the guide rail (3) independently of the rotational speed of each of the respective spindles (10) of said pair of bearing modules (4, 5, 6, 7, 8, 9).

11. A method of operating a linear bearing assembly (1) by displacing a slide (2) linearly on a guide rail (3) in a longitudinal direction of the guide rail, the slide (2) being supported by means of at least one bearing module (4, 5, 6, 7, 8, 9) including a spindle (10) and at least one bearing (19), the at least one bearing (19) being arranged on the spindle (10) and including a rotatable bearing part (11) being rotatable in relation to the spindle (10), and by rotating the spindle (10) in relation to the rotatable bearing part (11) by means of a motor, thereby modifying a relative rotational speed between the rotatable bearing part (11) and the spindle (10), **characterised in that** the spindle (10) is maintained rotatably journaled (18) on the slide (2) with its longitudinal axis at right angles to the longitudinal direction of the guide rail (3), and **in that** the rotatable bearing part (11) is rolling on the guide rail (3).

12. A method of operating a linear bearing assembly according to claim 11, wherein the slide (2) is supported by means of at least one pair of said bearing modules (4, 5, 6, 7, 8, 9), and wherein the respective spindles (10) of said pair of bearing modules are arranged in parallel and are rotated in opposite rotational directions by means of the motor.

13. A method of operating a linear bearing assembly according to claim 11, wherein the slide (2) is supported by means of at least one pair of said bearing modules (4, 5, 6, 7, 8, 9), wherein the respective spindles (10) of said pair of bearing modules are arranged in parallel, and wherein the rotational speed of each of the respective spindles (10) of said pair of bearing modules (4, 5, 6, 7, 8, 9) is controlled independently by means of a control system so that the relative rotational speed between each spindle (10) and the rotatable bearing part (11) of its associated bearing (19) corresponds at least substantially to but is oppositely directed to the relative rotational speed between the other spindle (10) and the rotatable bearing part (11) of its associated bearing (19), independently of the speed and direction of displacement of the slide (2) along the guide rail (3).
